# DEMANDE DE BREVET EUROPEEN

(11) **EP 1 661 760 A1**
(43) Date de publication de la demande: **31.05.2006**
(21) Numéro de dépôt: 05292179.8
(22) Date de dépôt: 17.10.2005
(51) Int. Cl.: B60R 1/06

(54) **Dispositif de fixation et agencement d'un rétroviseur extérieur sur un élément de carrosserie d'un véhicule**

(30) Priorité: 30.11.2004 FR 0412689
(71) Demandeur: Peugeot Citroen Automobiles SA, 78140 Vélizy-Villacoublay (FR)
(72) Inventeur: Pahler, Francis, 92210 Saint-Cloud (FR)
(74) Mandataire: Berger, Helmut

(57) **Abrégé**

L'invention concerne un dispositif de fixation d'un rétroviseur extérieur sur un élément de carrosserie d'un véhicule, ainsi qu'un agencement d'un rétroviseur extérieur sur un élément de carrosserie d'un véhicule, où le rétroviseur comprend une embase (31) destinée à être fixée sur le côté extérieur de l'élément de carrosserie et une coque (32) escamotable montée tournante sur l'embase (31). L'embase (31) comprend des moyens de fixation (41, 42) disposés de manière à permettre la fixation de l'embase (31) sur l'élément de carrosserie à partir de l'extérieur du véhicule, les moyens de fixation (41, 42) étant disposés sur l'embase (31) de manière qu'au moins un (41) des moyens de fixation (41, 42) soit accessible uniquement lorsque la coque (32) du rétroviseur est tournée de manière à s'étendre jusqu'à l'intérieur du véhicule.

## Description

L'invention concerne un dispositif de fixation d'un rétroviseur extérieur sur un élément de carrosserie d'un véhicule, ainsi qu'un agencement d'un rétroviseur extérieur sur un élément de carrosserie d'un véhicule.

Les rétroviseurs extérieurs montés sur des véhicules, notamment sur des véhicules automobiles dits voitures de tourisme, mais également les rétroviseurs extérieurs montés sur des véhicules industriels ont fait tout un cheminement aussi bien en ce qui concerne leur forme que leur fixation sur le véhicule. En effet, les premiers rétroviseurs comportaient essentiellement une coque dans laquelle était logée la glace du rétroviseur ainsi qu'un pied comportant deux ou trois trous à travers lesquels des vis étaient introduites de l'extérieur et engagées dans une partie adéquate d'une aile avant ou d'une portière du véhicule. Cette manière de fixer un rétroviseur sur un élément de carrosserie d'un véhicule était simple à réaliser et peu coûteuse. Cependant, lorsque la rouille s'y mettait, l'aspect désagréable des vis n'était que le début de la dégradation de la fixation du rétroviseur.

Aussi, les rétroviseurs ont été modifiés de manière à pouvoir les monter exclusivement de l'intérieur du véhicule. Cette manière de fixer des rétroviseurs sur des véhicules est avantageuse dans la mesure où, de cette manière, la fixation du rétroviseur est facile à protéger contre les intempéries, notamment puisque l'humidité a plus de mal à trouver un accès. Cependant, ce mode de fixation n'est pas commode puisqu'il faut introduire l'outillage aveuglement à l'intérieur de l'élément de carrosserie pour fixer le rétroviseur.

Les rétroviseurs ont à nouveau été modifiés, cette fois pour retourner au principe du montage des rétroviseurs sur un élément de carrosserie à partir de l'extérieur du véhicule, mais avec un élément complémentaire permettant d'empêcher un démontage intempestif à partir de l'extérieur du véhicule.

Cette manière de monter un rétroviseur sur un véhicule est décrite, par exemple, dans le document EP-A-1 213 183. Selon ce document, le rétroviseur comporte une embase sur laquelle est fixée, de manière non séparable, une coque escamotable. L'embase comporte des moyens de fixation démontables telles que, par exemple, des vis. Au moins un de ces moyens de fixation est disposé au fond d'un puit situé à l'intérieur de l'embase du rétroviseur. Afin d'empêcher l'accès d'un outil au fond du puit et ainsi aux moyen de fixation, une paroi du puit comporte un orifice latéral à travers lequel est inséré un moyen d'obstruction obstruant au moins partiellement le puit. Ce moyen d'obstruction, qui est avantageusement une vis, est introduit de l'intérieur de l'élément de carrosserie. Cette manière de fixer un rétroviseur sur un élément de carrosserie demande donc un moyen supplémentaire pour protéger les moyens de fixation.

Le but de l'invention est de proposer une fixation d'un rétroviseur extérieur sur un élément de carrosserie permettant de monter le rétroviseur exclusivement de l'extérieur du véhicule et, le cas échéant, de le démonter également exclusivement de l'extérieur du véhicule.

Cette fixation doit être exempte de moyens supplémentaires qui constitueraient une contrainte tant sur le plan des moyens nécessaires que sur celui du montage lui-même. De plus, la nouvelle fixation doit répondre aux exigences d'inviolabilité du montage sans avoir à utiliser des vis de fixation particulières qui seraient en dehors des standards et engendreraient alors des coûts plus importants.

Le but de l'invention est atteint avec un dispositif de fixation d'un rétroviseur extérieur sur un élément de carrosserie d'un véhicule, qui, pour un rétroviseur comprenant une embase destinée à être fixée sur le côté extérieur de l'élément de carrosserie et une coque escamotable montée tournante sur l'embase, comprend des moyens de fixation disposés sur l'embase et permettant de la fixer sur l'élément de carrosserie à partir de l'extérieur du véhicule, ces moyens de fixation étant disposés sur l'embase de manière qu'au moins un des moyens de fixation soit accessible uniquement lorsque la coque du rétroviseur est tournée de manière à s'étendre jusqu'à l'intérieur du véhicule.

Ainsi, le dispositif de fixation selon l'invention exploite la conception des rétroviseurs extérieurs actuels, c'est-à-dire le fait que les rétroviseurs comprennent d'une part une embase destinée à être fixée sur le côté extérieur de l'élément de carrosserie à l'aide de moyens de fixation appliqués à partir du côté extérieur de l'élément de carrosserie du véhicule, et d'autre part une coque escamotable montée tournante sur l'embase, aussi bien pour fixer le rétroviseur de la manière recherchée que pour assurer l'inviolabilité du montage.

En effet, les rétroviseurs extérieurs généralement utilisés, comprennent une coque relativement large pour donner un grand champ de vision, et une embase destinée à être fixée sur le côté extérieur d'un élément de carrosserie. Parfois, la coque est montée sur un pied, solidaire de la coque ou non, qui, lui, est monté tournant sur l'embase.

Bien que la présente invention concerne plus particulièrement les rétroviseurs extérieurs "drapeaux", tout autre type de rétroviseur remplissant des conditions d'architecture exposées ci-après fait également l'objet de la présente invention.

Les rétroviseurs "drapeaux" connaissent essentiellement deux positions. La première en est celle qui permet l'utilisation du rétroviseur par l'utilisateur du véhicule. Cette première position est donc celle dans laquelle l'extrémité libre de la coque est éloignée de l'élément de carrosserie. Le rétroviseur est "sorti".

La seconde de ces deux positions est celle dans laquelle la coque est escamotée, le rétroviseur est "rentré", notamment pour réduire temporairement l'envergure du véhicule, par exemple lorsque le véhicule est stationné au bord d'une route.

On observe sur des véhicules réalisés avant l'invention que, lorsque le rétroviseur est dans sa seconde position, les moyens de fixation à l'aide desquels l'embase est fixée sur l'élément de carrosserie, sont visibles et accessibles de l'extérieur.

Pour empêcher un démontage frauduleux du rétroviseur, les moyens de fixation sont disposés sur l'embase selon l'invention de telle manière qu'au moins un des moyens de fixation soit accessible uniquement lorsque la coque du rétroviseur se trouve dans une position impossible à atteindre sans action frauduleuse.

Autrement dit, l'idée qui est à la base de la présente invention est celle de donner au rétroviseur une architecture qui permette de tourner la coque du rétroviseur dans une position dans laquelle elle s'étend jusqu'à l'intérieur du véhicule, ou pour le moins jusqu'à l'intérieur de l'élément de carrosserie, pour libérer l'accès à au moins un des moyens de fixation disposé sur l'embase du rétroviseur. Cette position particulière du rétroviseur ne peut être atteinte que lorsqu'une ouverture pratiquée dans l'élément de carrosserie a été dégagée ou, notamment lors de la fabrication du véhicule, n'a pas encore été obturée.

En termes pratiques, l'ouverture dans l'élément de carrosserie, à travers lequel le rétroviseur doit s'étendre pour libérer l'accès aux moyens de fixation, est obturée ou libérée par une vitre du véhicule ou peut l'être, par exemple sur des véhicules de sécurité n'ayant pas de vitres mobiles, par une trappe ne pouvant être actionnée que de l'intérieur.

Selon des modes de réalisation ou variantes possibles de l'invention, il est également possible de concevoir le rétroviseur de manière qu'il puisse être placé en au moins trois positions distinctes, la première position étant celle dans laquelle elle recouvre les moyens de fixation et permet l'utilisation du rétroviseur, la deuxième étant celle où un des moyens de fixation est accessible et la troisième position est celle où le rétroviseur s'étend jusqu'à l'intérieur du véhicule et permet ainsi l'accès à l'ultime des deux ou plusieurs moyens de fixation par lesquels l'embase est fixée sur le côté extérieur de l'élément de carrosserie.

L'invention concerne par ailleurs aussi les caractéristiques ci-après considérées isolément ou selon toute combinaison techniquement possible :
- les moyens de fixation sont des moyens démontables ;
- les moyens de fixation sont des vis ;
- les moyens de fixation comprennent au moins une vis destinée à être vissée dans au moins un écrou fixé sur l'élément de carrosserie ;
- l'élément de carrosserie est une portière.

Le but de l'invention est également atteint avec un agencement d'un rétroviseur extérieur sur un élément de carrosserie d'un véhicule, le rétroviseur comprenant une embase destinée à être fixée sur le côté extérieur de l'élément de carrosserie et une coque escamotable montée tournante sur l'embase. L'embase comprend des moyens de fixation disposés de manière à permettre la fixation de l'embase sur l'élément de carrosserie à partir de l'extérieur du véhicule, et la coque du rétroviseur est disposé par rapport à l'élément de carrosserie de manière qu'elle puisse tourner entre une première position, dans laquelle elle recouvre les moyens de fixation et permet l'utilisation du rétroviseur, et au moins une deuxième position, dans laquelle elle est tournée de manière à s'étendre jusqu'à l'intérieur du véhicule et à permettre ainsi l'accès à au moins un des moyens de fixation à partir de l'extérieur du véhicule. Les moyens de fixation sont disposés sur l'embase de manière qu'au moins un des moyens de fixation soit accessible uniquement lorsque la coque du rétroviseur est tournée de manière à s'étendre jusqu'à l'intérieur du véhicule.

Selon une variante de cet agencement, la coque du rétroviseur est disposé par rapport à l'élément de carrosserie de manière qu'elle puisse tourner entre une première position, dans laquelle elle recouvre les moyens de fixation et permet l'utilisation du rétroviseur, et au moins une deuxième et une troisième positions, dans lesquelles elle est tournée de manière à s'étendre au moins dans une des deux positions jusqu'à l'intérieur du véhicule et à permettre successivement l'accès à un premier, puis à au moins un deuxième des moyens de fixation à partir de l'extérieur du véhicule.

D'autres caractéristiques et avantages de la présente invention ressortiront de la description ci-après d'un mode de réalisation de l'invention. La description est faite en référence aux dessins dans lesquels :
- la figure 1 représente un rétroviseur ancien fixé sur une portière d'un véhicule à l'aide de vis accessibles de l'extérieur ;
- la figure 2 représente un rétroviseur escamotable auquel peut s'appliquer la présente invention;
- la figure 3 représente schématiquement la fixation et le mouvement d'escamotage du rétroviseur de la figure 2 sans application de la présente invention;
- la figure 4 représente le principe d'escamotage et de protection selon la présente invention ; et
- les figures 5 à 7 représentent schématiquement trois positions possibles d'un rétroviseur auquel la présente invention s'applique, dont une position permettant le montage/démontage du rétroviseur.

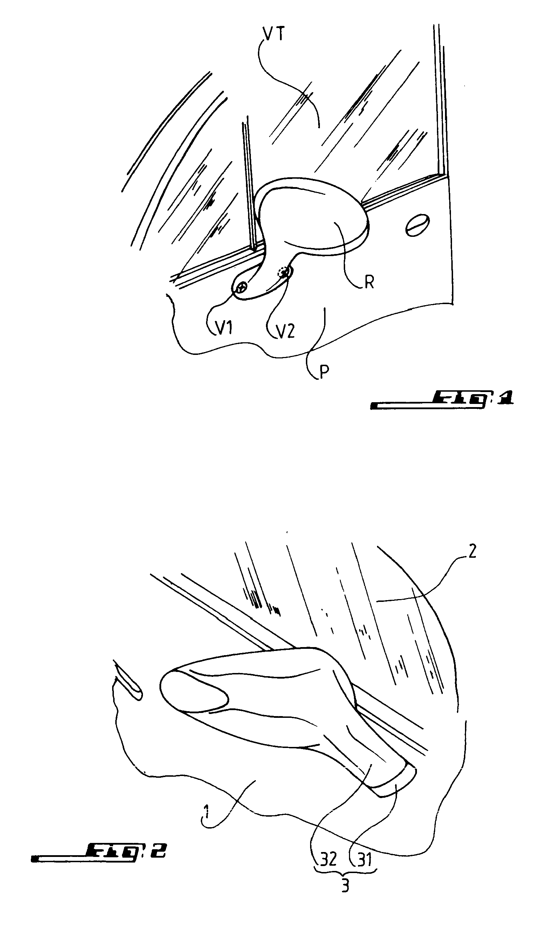

La figure 1 rappelle le mode de fixation d'un rétroviseur R ancien fixé sur une portière P d'un véhicule, la portière étant pourvue d'une vitre mobile VT. Le rétroviseur R est fixé sur le côté extérieur de la portière P à l'aide de deux vis V1, V2 librement accessibles de l'extérieur du véhicule.

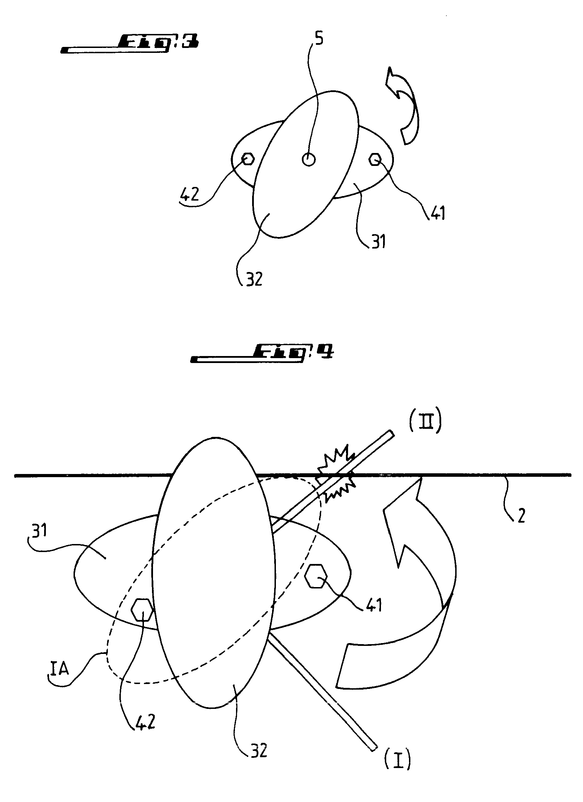

Par opposition au rétroviseur R de la figure 1 qui est de conception monolithique et donc ni escamotable ni réglable, la figure 2 représente un rétroviseur 3 monté sur une portière 1 d'un véhicule. La portière 1, constitutive d'un élément de carrosserie séparant l'intérieur de l'extérieur du véhicule, est pourvue d'une vitre 2 mobile, généralement mobile en montée et en descente à l'aide d'un lève-vitre.

Le rétroviseur 3 comprend une embase 31 fixée sur le côté extérieur de la portière 1, ainsi qu'une coque 32 escamotable qui est montée tournante sur l'embase 31.

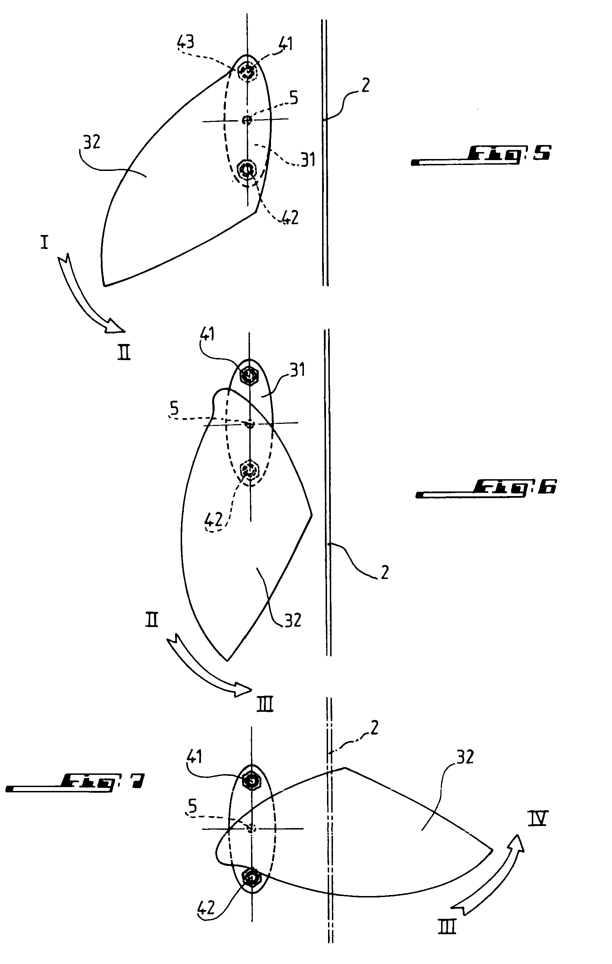

Le rétroviseur 3 est monté sur la portière 1 à l'aide d'un dispositif de fixation 4 comprenant des moyens de fixation 41, 42 disposés sur l'embase 31 et des moyens complémentaires de fixation 43 (voir figure 5) disposés sur la portière 1. Les moyens de fixation 41, 42 sont conformés pour être manoeuvrables depuis d'extérieur du véhicule.

Selon le mode de réalisation représenté sur les dessins, le dispositif de fixation 4 comprend deux vis 41, 42 insérées dans des logements conformés à cet effet dans l'embase 31 et destinés à s'étendre jusqu'à l'intérieur d'une portière 1. Les vis 41, 42 sont, par exemple, des vis pour tôle qui s'engagent dans des orifices prévus à cet effet à l'intérieur de la portière 1, ou des vis destinées à coopérer avec des écrous 43 logés à l'intérieur de la portière 1 ou soudés sur une partie de la carrosserie de la portière 1. Toute autre forme de moyens de fixation amovibles, susceptibles de pouvoir être introduits dans des lumières prévues à cet effet dans l'embase 31 et la portière 1, et pouvant assurer la fixation du rétroviseur sur la portière 1, sont également concevables comme moyens de fixation selon l'invention.

Afin que les vis 41, 42 soient accessibles de l'extérieur uniquement lorsque la coque 32 du rétroviseur 3 est tournée de manière à s'étendre jusqu'à l'intérieur du véhicule, l'emplacement des vis 41 et 42 est déterminé ensemble avec la forme de l'embase et d'un pied éventuel reliant la coque 32 à l'embase 31.

En effet, lorsque l'on regarde la figure 3, on comprend à la fois la facilité avec laquelle la présente invention rend possible de proposer une disposition permettant à la fois un montage purement à partir de l'extérieur du véhicule et une inviolabilité de ce montage. On comprend en même temps aussi l'enjeu lié au bon choix de la forme de l'embase et de la coque du rétroviseur 3.

Lorsque, comme cela est représenté sur la figure 3, ensemble avec la représentation sur la figure 2, le rétroviseur 3 présente des formes simples, il est aisé de s'imaginer qu'un "quart de tour" du rétroviseur suffit pour dégager les deux vis 41, 42 moyennant lesquelles la coque 32 est montée. La coque 32 est d'ailleurs montée tournante autour d'un axe de rotation 5. De plus, dans la configuration selon la figure 3, les deux vis 41, 42 et l'axe de rotation 5 sont disposés en alignement les uns par rapport aux autres et les vis 41, 42 sont disposées équidistant par rapport à l'axe de rotation 5.

Lorsque l'on maintient les formes simples de l'embase 31 et de la coque 32, comme cela est représenté sur la figure 4, mais lorsque l'on choisit l'emplacement des vis 41, 42 de manière astucieuse, on obtient l'effet escompté de la présente invention de la manière suivante.

Au début, le rétroviseur 3 se trouve dans la configuration représentée sur la figure 2, c'est-à-dire la coque 32 est dans une première position I permettant l'utilisation du rétroviseur 3. En même temps, lorsque le rétroviseur 3 se trouve dans cette première position I, le pied de la coque 32 recouvre les vis 41, 42 et permet donc l'utilisation du rétroviseur 3.

Lorsqu'il s'agit de libérer l'accès aux vis 41, 42, le rétroviseur 3 est tourné vers la paroi extérieure 2 de la partie 1 pour atteindre la position II, comme cela est représenté sur la figure 4.

Pendant le mouvement de rotation du rétroviseur 3 de la position I vers la position II, la coque 32 bute sur la vitre 2 fermée. La coque 32 prend à ce moment cette position intermédiaire IA représentée en pointillés sur la figure 4. On notera que, dans cette position intermédiaire, la vis 41 est déjà accessible alors que la vis 42 n'est toujours pas accessible.

Pour atteindre la position II, il faut descendre la vitre 2. Lorsque la vitre 2 est descendue, on peut continuer à faire tourner le rétroviseur 3 pour atteindre la position II dans laquelle la coque 32 s'étend jusqu'à l'intérieur du véhicule. Il est donc nécessaire que le rétroviseur 3 puisse pénétrer à l'intérieur du véhicule pour dégager l'accès à l'ensemble des moyens de fixation, ici aux vis 41 et 42. La figure 4 illustre par ailleurs le principe de la présente invention, selon lequel au moins un des moyens de fixation doit accessible uniquement lorsque la coque du rétroviseur est tournée de manière à s'étendre jusqu'à l'intérieur du véhicule. Ce "au moins un moyen" est ici la vis 42 désignée comme la vis décisive pour garantir l'inviolabilité du montage du rétroviseur 3 sur la portière 1.

Lorsque l'on compare la disposition des vis 41, 42 selon la figure 3 avec la configuration de ces vis selon la figure 4, on remarque que la disposition symétrique des vis 41, 42 par rapport à l'axe de rotation 5 et leur alignement avec celui-ci ne permet pas d'obtenir l'effet escompté selon l'invention. Si par contre, on choisit une disposition des vis 41, 42, et notamment la disposition de la vis 42, selon la figure 4, on note que, même pour une forme simple, ici ovale, l'ensemble des moyens de fixation, donc l'ensemble des vis 41, 42 n'est accessible que lorsque la coque 32 a atteint la position II et s'étend donc jusqu'à l'intérieur du véhicule.

Il est rappelé ici que, par exemple pour des véhicules blindés n'ayant pas de vitres mobiles, la présente invention peut s'appliquer en prévoyant dans l'élément de carrosserie sur lequel le rétroviseur est monté, une trappe que l'on peut manipuler exclusivement à partir de l'intérieur du véhicule et qui, lorsqu'elle n'est pas dans sa position de fermeture, dégage un évidement suffisamment grand, ou pour le moins suffisamment profond, pour permettre à la coque 32 d'atteindre la position II.

Lorsque l'on choisit une forme un peu plus complexe pour la coque 32 du rétroviseur 3 ou pour un pied du rétroviseur 3 solidaire de la coque 32 et constituant la partie montée tournant sur l'embase 31, tel que cela est représenté sur les figures 5 à 7, on peut disposer les vis 41, 42 même en alignement avec l'axe de rotation 5 et cela en parallèle au plan formé par la vitre 2.

Ainsi, la figure 5 représente la coque 32 dans une position I dans laquelle la coque recouvre les moyens de fixation 41, 42 et dans laquelle elle permet l'utilisation du rétroviseur. Lorsque l'on fait tourner la coque 32 dans le sens indiqué par une flèche courbe sur la figure 6, vers une position II, qui correspond à une position escamotée réduisant la silhouette du véhicule et donnant plus de place pour le passage d'autres véhicules, on obtient le dégagement de la vis 41, donc de l'un des moyens de fixation de la coque 32 sur l'embase 31. Mais on n'a toujours pas accès à l'ensemble des moyens de fixation.

Pour obtenir aussi accès à la vis 42, il faut que l'on baisse d'abord la vitre 2 pour pouvoir faire tourner la coque 32 de la position II vers la position III dans laquelle la coque 32 s'étend jusqu'à l'intérieur du véhicule.

Selon une première variante de réalisation, non représentée sur les dessins, il est concevable à partir de la suite des figures 5 à 7 que la forme de la coque 32 et de l'embase 31 puisse être choisie de manière à libérer successivement l'accès à l'un et ensuite à l'autre des moyens de fixation.

Et selon une seconde variante de réalisation, également non représentée sur les dessins, on définit même d'avantage de positions, par exemple trois positions, pour monter/démonter trois moyens de fixation. En même temps, on agence la forme de la coque et/ou la disposition des vis de manière que, à chacune des positions de la coque 32, un seul des moyens de fixation soit accessible. Ainsi, pour obtenir le démontage du rétroviseur 3 de portière 1, il faut que la coque 32 atteigne la position 3 représentée sur la figure 7 après avoir parcourue les autres positions et après avoir donc permis de retirer les moyens de fixation correspondant.

La condition de l'invention selon laquelle au moins un des moyens de fixation ne soit accessible que lorsque la coque du rétroviseur est tournée de manière à s'étendre jusqu'à l'intérieur du véhicule, peut être remplie aussi bien lors du montage du véhicule que plus tard au cours d'une réparation du véhicule.

En effet, lors de la fabrication du véhicule, et notamment lors du montage des portes et des rétroviseurs, le rétroviseur extérieur est avantageusement monté sur la portière avant que la vitre ne soit insérée. De cette manière, la portière présente l'ouverture nécessaire pour pouvoir positionner la coque 32 du rétroviseur 3 de manière à ce qu'elle s'étende jusqu'à l'intérieur du véhicule.

Bien entendu, si même pendant la fabrication du véhicule il serait impossible de monter le rétroviseur extérieur avant que la vitre ne soit mise en place, on procèdera de la même façon que décrit plus haut, c'est-à-dire on ouvre d'abord la vitre et oriente ensuite la coque 32 du rétroviseur 3 dans la position requise pour obtenir l'accès à l'emplacement où le moyen de fixation doit être inséré.

## Revendications

1. Dispositif de fixation d'un rétroviseur extérieur (3) sur un élément de carrosserie (1) d'un véhicule, le rétroviseur (3) comprenant une embase (31) destinée à être fixée sur le côté extérieur de l'élément de carrosserie (1) et une coque (32) escamotable montée tournante sur l'embase (31), le dispositif de fixation comprenant des moyens de fixation (41, 42) disposés sur l'embase (31) et permettant de la (31) fixer sur l'élément de carrosserie (1) à partir de l'extérieur du véhicule,
**caractérisé en ce que** les moyens de fixation (41, 42) sont disposés sur l'embase (31) de manière qu'au moins un (41) des moyens de fixation (41, 42) soit accessible uniquement lorsque la coque (32) du rétroviseur (3) est tournée de manière à s'étendre jusqu'à l'intérieur du véhicule.

2. Dispositif de fixation selon la revendication 1, **caractérisé en ce que** la coque (32) escamotable est monté tournante entre une première position (I), dans laquelle elle recouvre les moyens de fixation (41, 42) et permet l'utilisation du rétroviseur, et au moins une deuxième position (II), dans laquelle elle est tournée de manière à s'étendre jusqu'à l'intérieur du véhicule et à permettre ainsi l'accès à au moins un (42) des moyens de fixation (41, 42) à partir de l'extérieur du véhicule.

3. Dispositif de fixation selon la revendication 1 ou 2, **caractérisé en ce que** la coque (32) escamotable est monté tournante entre une première position (I), dans laquelle elle recouvre les moyens de fixation (41, 42) et permet l'utilisation du rétroviseur, et au moins une deuxième (II) et une troisième (III) positions, dans lesquelles elle est tournée de manière à s'étendre au moins dans une des deux positions (II, III) jusqu'à l'intérieur du véhicule et permet successivement l'accès à un premier, puis à au moins un deuxième (42) des moyens de fixation (41, 42) à partir de l'extérieur du véhicule.

4. Dispositif de fixation selon l'une quelconque des revendications 1 à 3, **caractérisé en ce que** les moyens de fixation (41, 42) sont des moyens démontables.

5. Dispositif de fixation selon l'une quelconque des revendications 1 à 4, **caractérisé en ce que** les moyens de fixation (41, 42) sont des vis.

6. Dispositif de fixation selon l'une quelconque des revendications 1 à 4, **caractérisé en ce que** les moyens de fixation (41, 42) comprennent au moins une vis (41) destinée à être vissées dans au moins un écrou (43) fixé sur l'élément de carrosserie (1).

7. Dispositif de fixation selon l'une quelconque des revendications 1 à 6, **caractérisé en ce que** l'élément de carrosserie (1) est une portière.

8. Agencement d'un rétroviseur extérieur () sur un élément de carrosserie () d'un véhicule, le rétroviseur (3) comprenant une embase (31) destinée à être fixée sur le côté extérieur de l'élément de carrosserie (1) et une coque (32) escamotable montée tournante sur l'embase (31), l'embase (31) comprenant des moyens de fixation (41, 42) disposés de manière à permettre la fixation de l'embase (31) sur l'élément de carrosserie (1) à partir de l'extérieur du véhicule,
**caractérisé en ce que** la coque (32) du rétroviseur est disposé par rapport à l'élément de carrosserie (1) de manière qu'elle puisse tourner entre une première position (I), dans laquelle elle recouvre les moyens de fixation () et permet l'utilisation du rétroviseur, et au moins une deuxième position (II), dans laquelle elle est tournée de manière à s'étendre jusqu'à l'intérieur du véhicule et à permettre ainsi l'accès à au moins un (42) des moyens de fixation (41, 42) à partir de l'extérieur du véhicule et
**en ce que** les moyens de fixation (41, 42) sont disposés sur l'embase (31) de manière qu'au moins un (42) des moyens de fixation (41, 42) soit accessible uniquement lorsque la coque (32) du rétroviseur est tournée de manière à s'étendre jusqu'à l'intérieur du véhicule.

9. Agencement selon la revendication 8, **caractérisé en ce que** la coque (32) du rétroviseur est disposé par rapport à l'élément de carrosserie (1) de manière qu'elle puisse tourner entre une première position (I), dans laquelle elle recouvre les moyens de fixation (41, 42) et permet l'utilisation du rétroviseur, et au moins une deuxième (II) et une troisième (III) positions, dans lesquelles elle est tournée de manière à s'étendre au moins dans une des deux positions (II, III) jusqu'à l'intérieur du véhicule et à permettre successivement l'accès à un premier, puis à au moins un deuxième (42) des moyens de fixation (41, 42) à partir de l'extérieur du véhicule.
